(19) Europäisches Patentamt / European Patent Office / Office européen des brevets

(11) **EP 2 863 360 B1**

(12) **EUROPEAN PATENT SPECIFICATION**

(45) Date of publication and mention
of the grant of the patent:
**22.08.2018 Bulletin 2018/34**

(51) Int Cl.:
*G06T 7/00* *(2017.01)*      *G06T 7/10* *(2017.01)*
*G06K 9/62* *(2006.01)*

(21) Application number: **13425139.6**

(22) Date of filing: **21.10.2013**

(54) **Multimodality image segmentation of volumetric data sets**

Multimodale Bildsegmentierung von volumetrischen Datensätzen

Segmentation d'image multimodalités faisant appel à des ensembles de données volumétriques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.04.2015 Bulletin 2015/17**

(73) Proprietor: **Tecnologie Avanzate T.A. Srl
10153 Torino (TO) (IT)**

(72) Inventor: **Fontanarosa, Davide
10153 Torino (TO) (IT)**

(74) Representative: **Santi, Filippo et al
Barzanò & Zanardo Roma S.p.A.
Via Piemonte 26
00187 Roma (IT)**

(56) References cited:
• **BHANU B ET AL: "ADAPTIVE IMAGE
SEGMENTATION USING A GENETIC
ALGORITHM", IEEE TRANSACTIONS ON
SYSTEMS, MAN AND CYBERNETICS, IEEE INC.
NEW YORK, US, vol. 25, no. 12, 1 December 1995
(1995-12-01), pages 1543-1566, XP000538769,
ISSN: 0018-9472, DOI: 10.1109/21.478442**

**Description**

Technical Field

The present disclosure relates to computer-based imaging using multiple modalities and decision making applied to segmentation of volumetric data sets from said modalities in the context of imaging such as medical imaging and similar applications. In some aspects, the system and method considers and automatically selects a best segmentation algorithm or algorithms and associated parameters from a parameter space to optimize segmentation of input data sets.

**Background**

Numerous imaging methods have been devised, a given method being selected for a given application based on the relative cost and scientific capacity of the method to deliver a useful image for the given application. For example, in the field of medical imaging, a goal is usually to derive an image or visual spatial representation of an organ or region of interest under examination in a patient's body. Specifically, a clinical imaging system generally employs a basic technique, method, or modality (e.g., nuclear magnetic resonance, computed tomography, X-ray, proton-electron tomography, ultrasound, etc.) for capturing and generating images, depending on the type of tissue under examination or the type of clinical condition being investigated.

Some imaging systems employ more than one imaging modality, perhaps at the same time, and are thus designated as multi-modality imagers. Modern medical imaging systems include a physical component or set of components that carry out the interrogation of the region of interest (e.g., using ionizing radiation, non-ionizing radiation, ultrasound waves, and so on).The physical components of the imaging system can include a source of radiation or interrogation energy, or an array of sources operating in concert for better resolution and spatial discrimination, especially in multidimensional imaging of regions of interest (2D, 3D imaging systems).

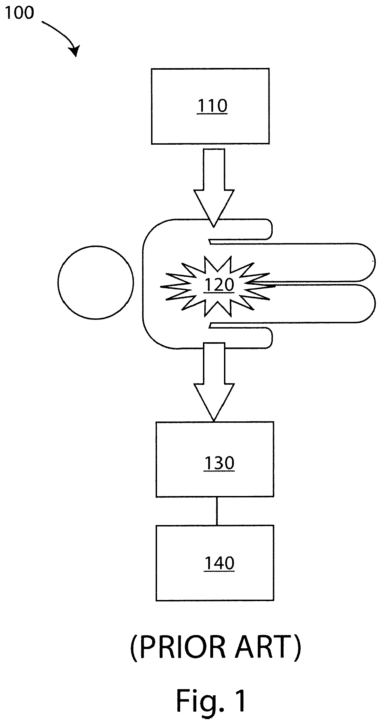

Referring to Fig. 1, which depicts a simplified illustration of an imaging system 100 according to the prior art, the system 100 includes a physical component 110 that emits energy, radiation or employs another modality so that it interrogates the region of interest 120 (e.g., an organ or other volume). The interrogation is performed by causing some interaction between the mass within the region of interest and the applied modality. The condition of the object under examination affects and modulates and alters some aspect of the interrogating modality so that a sensor or detector 130 can determine the condition of the examined object based on this alteration or modulation of the interrogating modality. In one example, an X-ray projects X-rays into and through a region of interest, whereby the X-rays are spatially attenuated (e.g., scattered, absorbed, diminished) by the integrated tissue density corresponding to a location in the resultant X-ray image. The end result is a spatially-encoded depiction of the imaged characteristic of the contents of the region of interest e.g., an X-ray image of the density distribution of the imaged object in the ROI. The representation of the imaged information can be stored, processed, or displayed on an image output display 140 such as a computer screen or printer or photographic film.

BHANU B ET AL: "ADAPTIVE IMAGE SEGMENTATION USING A GENETIC ALGORITHM, IEEE TRANSACTIONS ON SYSTEMS, MAN AND CYBERNETICS, IEEE INC. NEW YORK, US, vol. 25, no. 12, 1 December 1995, pages 1543-1566 discloses a closed loop image segmentation system which incorporates a genetic algorithm to adapt the segmentation process to changes in image characteristics caused by variable environmental conditions such as time of day, time of year, clouds, etc. The segmentation problem is formulated as an optimization problem and the genetic algorithm efficiently searches the hyper-space of segmentation parameter combinations to determine the parameter set which maximizes the segmentation quality criteria. The goals of the adaptive image segmentation system are to provide continuous adaptation to normal environmental variations, to exhibit learning capabilities, and to provide robust performance when interacting with a dynamic environment.

Present multimodality imaging systems remain incapable of effective exploitation of or optimization of the respective modalities thereof and better methods of analyzing and segmenting image data are needed.

Summary

Aspects of the present invention are directed to a system for segmentation of data in a region of interest according to claim 7. Other aspects are directed to a method for segmenting an image according to claim 1. Multiple algorithms may be employed serially or in parallel so as to best achieve a desired segmentation result. The algorithms can be tested against some metric and combined, such as in a linear combination, to be so employed. Also, parameters for each of the algorithms can be optimized and selected to suit an application at hand.

Brief Description of the Drawings

The invention and the following detailed description of certain embodiments thereof may be understood by reference to the following drawings:

Fig. 1 depicts a simplified representation of a basic imaging system;
Fig. 2 illustrates a multi-modality imaging and decision making system;
Fig. 3 illustrates inputs and outputs to a decision making unit;
Fig. 4 illustrates another representation of a decision making module;
Fig. 5 illustrates a modality-DMA parameter space map;
Fig. 6 illustrates a map between modality space and DMA parameter space;
Fig. 7 illustrates an exemplary method of automating the algorithm selection for volumetric data sets in a computer system;
Fig. 8 illustrates an exemplary table relating feature vectors with input data sets;
Fig. 9 through 11 illustrates exemplary representations of information stored in the segmentation system according to some embodiments;
Fig. 12 illustrates a schematic representation of major components of a segmentation system according to some embodiments; and
Fig. 13 illustrates a process for adding a new segmentation algorithm or data to the system according to some embodiments.

Detailed Description

Multiple imaging modalities can by employed to image different features or qualities of a region of interest. In addition, the resulting volumetric data sets can be segmented to highlight or find an object, component, organ, or portion of a region of interest that has certain attributes. Segmentation can be useful in a medical context to find a diseased organ or region of tissue. A question addressed by the present invention is how to selectively and programmably determine and optimize multimodality imaging and segmentation for given applications and systems for accomplishing the same. In some aspects, a decision making system and method are provided for effective exploitation of a plurality of co-registered volumes in a target volume in a region of interest. The decision making system may include a decision making processor executing software instructions programmed to facilitate decision making steps according to an algorithm or procedure. In some embodiments the programmed decision making apparatus generates sets of parameters and weighting factors corresponding to multiple imaging modalities and are used to respectively influence the selection of optimized segmentation algorithms that are used for image generation.

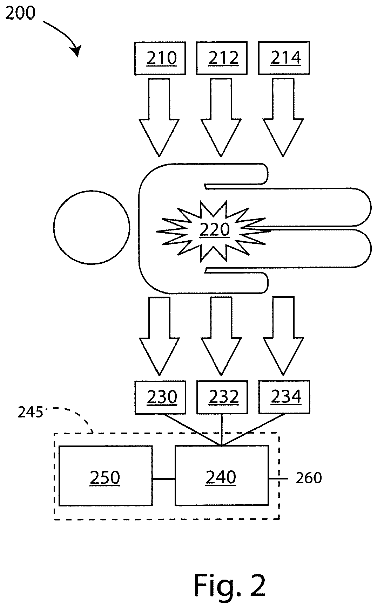

Fig. 2 depicts a multimodality imaging system 200 for imaging a region of interest 220. The objects under examination may be for example human organs or tissues, or other objects of interest in environmental, research, manufacturing or other fields of use.

Several physical imaging modalities, depicted as 210, 212 and 214 are available and may be employed separately or in combination at the same time or substantially at the same time or sequentially or in cooperation with one another as needed. For example, magnetic resonance imaging (MRI), functional MRI (fMRI), 3D ultrasound, positron emission tomography (PET), computed tomography (CT) methods, cone beam CT (CBCT), X-ray, ultrasound, single photon emission computed tomography (SPECT), optical imaging or other modalities may be employed in system 200.

Detectors or sensors or arrays of such detectors and sensors 230, 232 and 242 correspond to the sources of the imaging modalities 210, 212 and 214. The sensors or detectors 230, 232, 234 can capture signals, radiation, energy, fields, or generally information affected by a condition of the target volume 220 so as to impart image data relating to the shape, size, location, configuration or any other feature of target volume 220 so as to create an image of target volume 220 or a feature thereof.

The signals collected by sensors 230, 232, 234 are delivered for processing and display 240. A computerized system 245 may include the hardware and software for processing the image signals and for displaying the same or storing or transmitting the same.

It is typical to perform some manipulation of the signals detected by sensors 230, 232 and 234 in the course of generating images of target volume 220. Mathematical operations on data from the image signals can be performed in general processing units or specialized coprocessors and graphics processors of computer system 245.

A control unit 250, which is illustrated as a separate module, but it may be implemented as a programming module (software unit) in the same computer system 245 or processor as other functions. The processor or processors of computer system 245 are generally integrated circuits (ICs) capable of processing machine-readable instructions or programming instructions provided thereto. In addition, the computer system 245 may include network connection 260 modules for connection to other machines, computers, networks, or data storage devices. Digital memory units are included in computer system 245 in some embodiments and are able to store software program instructions as well as data relating to the images of target volume 220.

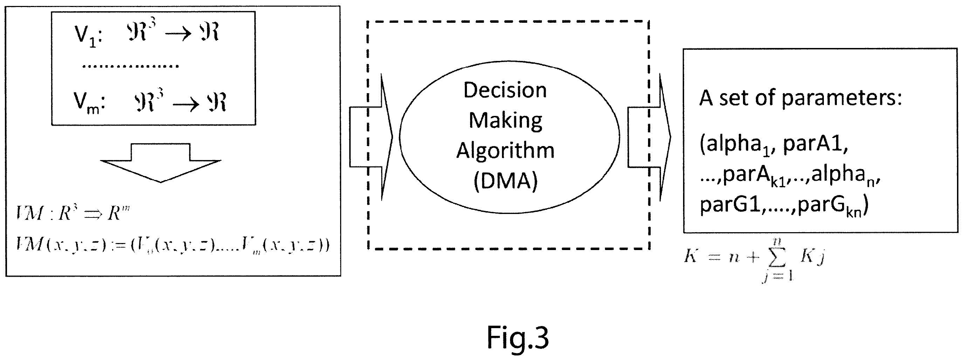

Fig. 3 illustrates an internal process 300 taking place in a processing component of the imaging system described above. Here a set of inputs 320 are provided to a decision making algorithm (DMA) running in a decision making processor 310 of the system. In one embodiment, inputs 320 are used by decision making processor 310 and its executing DMA to provide output parameters, weights and other segmentation configuration data 330 using segmentation algorithms registered in the DMA..

We now consider some exemplary features of the decision making apparatus, processor and process according to some embodiments of the present invention. These embodiments are illustrative and provided to describe how the present systems and methods may be made and used, and are not intended as comprehensive or restrictive of other implementations that would be apparent to those skilled in the art upon review of this disclosure.

It is helpful to describe some representations that facilitate discussion of the present multimodality decision making systems and methods. A volume may defined by a function

$$V : R^3 \Rightarrow R.$$

A set of multimodal co-registered volumes may then be represented as

$$SV = \{ V_i, 1 <= i <= m \}$$

for m modalities, where m is greater than 1.

Therefore, a multimodal volume of m modalities may be written as

$$VM : R^3 \Rightarrow R^m$$

or

$$VM(x,y,z) := (V_0(x,y,z), ..., V_m(x,y,z)).$$

Now we discuss segmentation of a volume, which is generally in or proximal to the target volume. As known to those skilled in the art, segmentation is useful to bring out or isolate certain features or qualities of an image or object under investigation. For example, segmenting image data to point out diseased portions thereof such as tumors has been accomplished by computer-assisted segmentation methods. Also, delineation of different types of tissues can be done using computer processing of image data from a target volume. Segmentation can separate bone from soft tissue in an image and define a boundary so that the boundary defines a sub-volume of a region of interest, e.g., the target volume. It is to be appreciated that the present examples are provided for the sake of illustration, and those skilled in the art would understand the use of the present concepts in a generalized method along the same lines.

In some instances, segmentation in a volume can be considered by an assignment of binary values to volume elements or data points or pixels within the target volume. Specifically, in defining a segment of an image volume we may assign some pixels in the volume a value of zero and other pixels a value of one, depending on their characteristics of interest. This can be described as

$$R^3 \Rightarrow [0;1]$$

which locates a segmented region in a target volume as having point values of one (not zero). Note that the above can also be generalized to assigning real numbers (e.g., in the range [0;1] and not just integer or binary values to the same. In this way, the values can represent probabilities for the corresponding points or pixels to belong to or be associated with an object or region or target volume to be segmented.

A segmentation algorithm or process can be set or assigned through a set of computer program instructions executed on a segmentation apparatus, processor or computing machine. A segmentation algorithm could be written as

$$\varphi(R^3 \Rightarrow R^m) \Rightarrow (R^3 \Rightarrow [0,1])$$

which associates a segmentation of $R^3$ to a multimodal volume.

Now, a parameterized multimodal segmentation method is described by a function

$$\Phi : (R^k \times (R^3 \Rightarrow R^m)) \Rightarrow (R^3 \Rightarrow [0,1]),$$

where k is a parameter number.

Furthermore, an extended segmentation algorithm could be defined that depends on the k parameters as

$$\Phi(p_1, ..., p_k) := \varphi_{1,...k},$$

where $\varphi_{1,...k}$ is a segmentation algorithm obtained once the k parameters are fixed, determined, assigned, or otherwise calculated.

Given a set of n parameterized multimodal segmentation algorithms:

$$SA = \{\Theta j, 1 <= j <= n\}$$

and $K_j$ parameters associated with the j-th algorithm, it is possible to derive a composite parameterized multimodal segmentation algorithm

$$\Psi : (R^K \times (R^3 \Rightarrow R^m)) \Rightarrow (R^3 \Rightarrow [0,1]),$$

$$K = n + \sum_{j=1}^{n} Kj$$

$\Psi(\alpha_1, p1_1, ..., p1_{k1}, ..., \alpha n, pn_1, ..., pn_{kn}) := \alpha 1\theta 1(p1_1, ...p1_{k1}) + ... + \alpha n\theta n(pn_1, ..., pn_{kn})$
which is a linear combination of the n algorithms of the set and where the weights $\alpha j$ represent n additional parameters together with the parameters associated with each algorithm of the set.

The decision making algorithm (DMA) discussed earlier comprises computer-readable instructions for execution in a processing decision making apparatus or processor. A DMA for use in an imaging system according to embodiments of the present invention is associated with a set of multimodal segmentation algorithms (SA's) and can be written as

$$DMA : (R^3 \Rightarrow R^m) \Rightarrow R^K.$$

In some aspects, the DMA acts to optimize the weighting and use of the multimodal imaging capabilities of a multimode imaging system. To accomplish this end the present apparatus and method take as input a multimodal volume in $(R^3 \Rightarrow R^m)$ that determines a best combination of parameters as described above in $R^K$ for the composite parameterized multimodal segmentation algorithm.

An apparatus and method of use includes a best set of parameters, sometimes used in linear combination, to be applied to each of a plurality of imaging modality processes. In an exemplary aspect, this comprises weighting factors or coefficients or calibration parameters applied to the multiple modalities and collectively selected to obtain a favorable imaging result.

Accordingly, in some aspects, the present method and computer-driven system include a decision making algorithm that can automatically select one or more algorithms to be used in the segmentation.

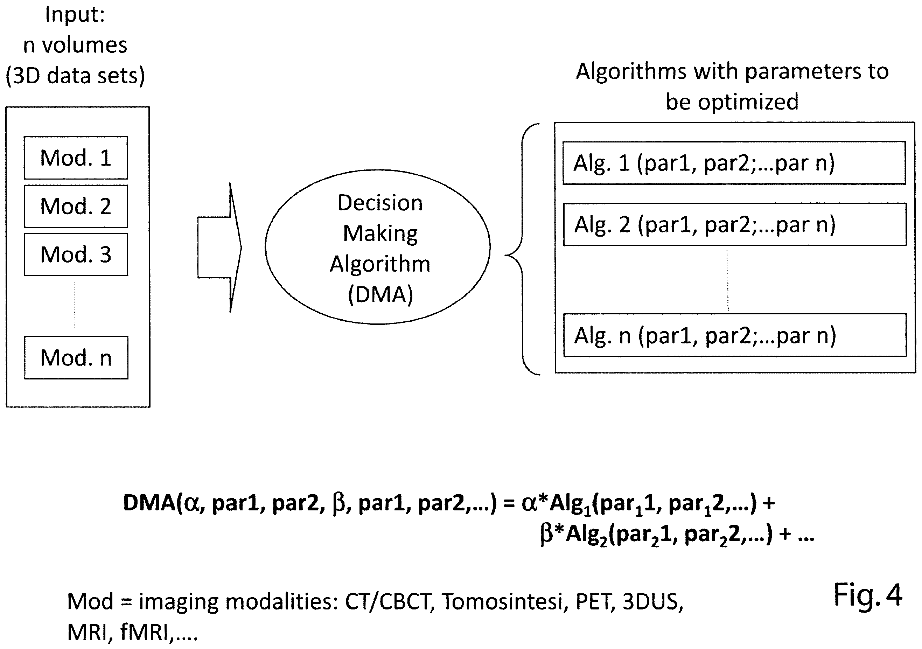

Fig. 4 illustrates another representation of a method 400 implemented on a processor driven device or system. The method 400 takes inputs 410 including a plurality of imaging modalities representing N volumes or 2D/3D data sets. The method uses a DMA to provide outputs 420 including optimized parameters and algorithm weight factors as shown in Fig. 3.

In some embodiments, DMA module takes input 410 including a plurality of imaging modalities representing n volumes or 2D/3D data sets and is provided with a set of segmentation algorithms 420. The system predicts the best configuration of parameters (for each algorithm) and weights (among algorithms) for the given combination of input 410 and registered set of segmentation methods 420.

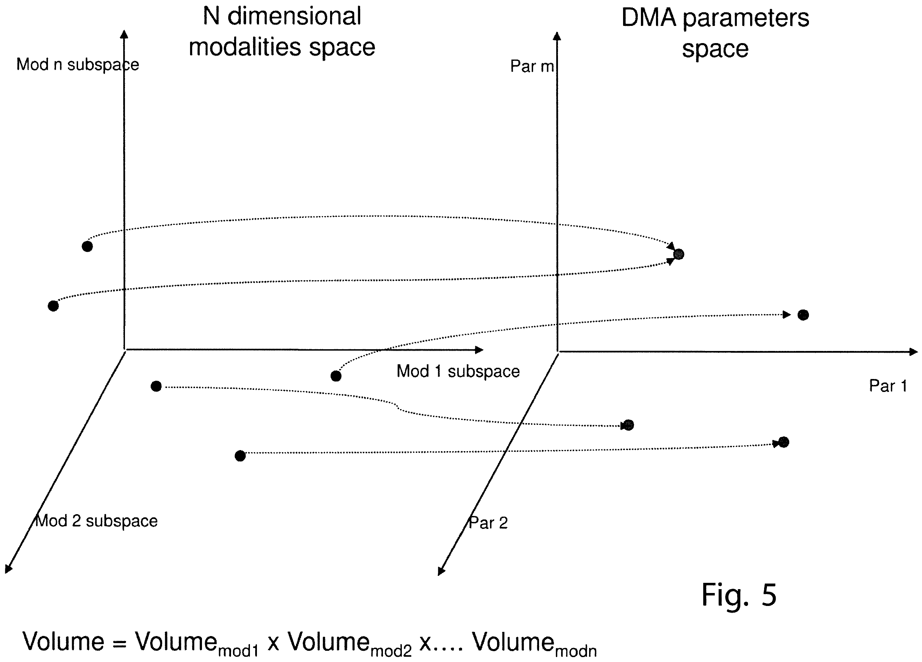

Fig. 5 illustrates a modality-DMA parameter space map 500 showing the correspondence of a N dimensional modalities space 510, including a plurality of modality subspace axes, with a DMA parameter space 520, including a plurality of parameter (Par) axes. The total volume represented is a sum of the modality volumes falling under it.

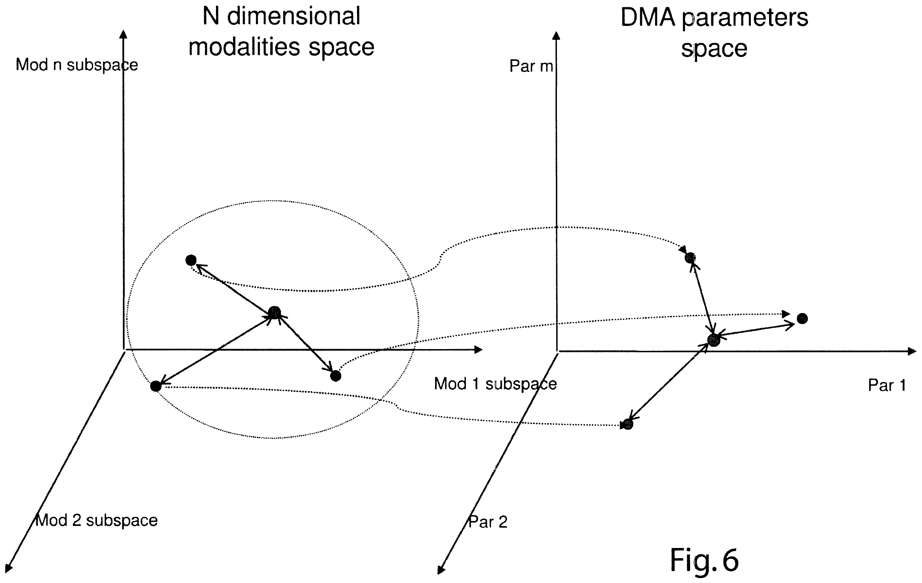

Fig. 6 illustrates a map 600 between modality space 610 and DMA parameter space 620. A fuzzy set evaluation of the analyzed target volume (red dot) in some aspects represents an evaluated weighting function volume to yield an estimate of its similarity with elements of a training set.

The concepts above can be implemented and executed in hardware and/or software. Special purpose computing hardware may be employed as well as general purpose computing systems adapted for this application. Some combination of specialty hardware and software in combination with general purpose (off the shelf) hardware and software would likely constitute most embodiments, but to a degree depending on a specific application.

Sensors are coupled to receiver circuitry to receive signals from the sensors sensing the target volume under investigation. Signals from the sensors are delivered to processing circuitry such as central processing units, general processing units, digital signal processors, and so forth to process the signals received. The processors in turn deliver data to storage devices if there is a need to retain data for the permanent record or temporarily for use in subsequent processing steps. The storage and processing devices may be local to the overall system or may be distributed. Network (wired, wireless, including Internet connections) may be employed to connect various parts of the system if it is not centrally located or locally placed.

The machinery of the present system may include circuits capable of storing and/or executing machine-readable instructions or program instructions. The system can be designed along functional lines so that each piece of the apparatus executes a particular function, or mixed functionality can be carried out in a same component (e.g., processor, memory unit). Since these design and construction details can change, the system is described generally for the sake of illustration, with details as described attaching to some embodiments of the system.

As far as function and features, the system can carry out the present methods in two main stages: a training stage and an execution stage. The training stage itself may be considered to include an optimization stage and a feature extraction stage.

The following example will better illustrate the use of two imaging modalities, which for this example are ultrasound (US) and computed tomography (CT). Three segmentation algorithms are employed, and represented in a programmable device in the form of machine readable instructions or program instructions. Alternatively, the algorithms are provided as separate modules that can be dynamically associated with the DMA unit, for example as plug-in modules. This scenario can be represented as follows:

Alg_1: Algorithm N.1 using only US data,
Alg_2: Algorithm N.2 using only CT data, and
Alg_3: Algorithm N.3 using both US and CT data.

In addition, as mentioned before, different parameter configurations can be associated with each segmentation algorithm. These parameters can vary within ranges and with step values that depend on the algorithm definition.

The inputs to the system include input data defining an input data set, which can be represented as:

Vol1: the volume associated with the first, e.g., US scan, and
Vol2: the volume associated with the second, e.g., CT scan,
ROI: the region of interest in which the algorithms are applied.

In the training stage, a manually-segmented volume may be associated with each input data set. The manually-segmented volume may be defined by an expert and may be used as a reference. The present example, with the two imaging modalities (m=2) gives data volumes:

$$V_1 = V_{US} \text{ and } V_2 = V_{CT},$$

$$SV = \{V_{US}, V_{CT}\}.$$

Since we are using three segmentation algorithms (n=3):

$$SA = \{Q_j, 1<=j<=3\}$$

Alg_1 = Q1 ($p1_1$,..., $p1_{k1}$); input data for Alg_1: ($V_{US}$, Void, ROI).
Alg_2 = Q2($p2_1$,..., $p2_{k2}$); input data for Alg_2: (Void, $V_{CT}$, ROI).
Alg_3 = Q3($p3_1$,..., $p3_{k3}$); input data for Alg_3: ($V_{US}$, $V_{CT}$, ROI).

where "VOID" means that the volume is not taken into account or in use.

When only US data is present in an input data set, the CT volume is filled with zero values, and vice versa. The CT-based segmentation algorithm is not relevant in this case. Any segmentation outputs generated by it would be discarded or ignored. Those skilled in the art would appreciate that this scenario can be extended and generalized.

In some aspects, the decision making method and system of the present invention include several stages, which can be described as: a data set preparation phase, a training phase, and an execution phase. The first two phases can be implemented at configuration time while the last phase can be implemented at execution time. Those skilled in the art can understand how to reconfigure a given embodiment to suit their purposes, including by adding or deleting some of the present elements and steps. Therefore, this description is certainly not exhaustive of the ways one can view the present system and process, but exemplary. As mentioned elsewhere, the data set preparation phase of the process may be broken down into a parameter optimization stage and a feature extraction stage. These phases and stages are conceptual of course, and the apparatus carrying out the present method does not generally distinguish between one conceptual phase of the process and another.

In the training phase, an expert (e.g., an experienced clinical radiology technician, radiologist, image processing expert, etc.) can delineate or define a reference target contour associated with each volumetric data set input to the system. Any suitable spatial representation may be used in the segmentation process. For example, 3D meshes, binary masks, level sets, or point sets may be employed. The output segmentation preferably shares such representation formats with the input data sets of the 3D region of interest.

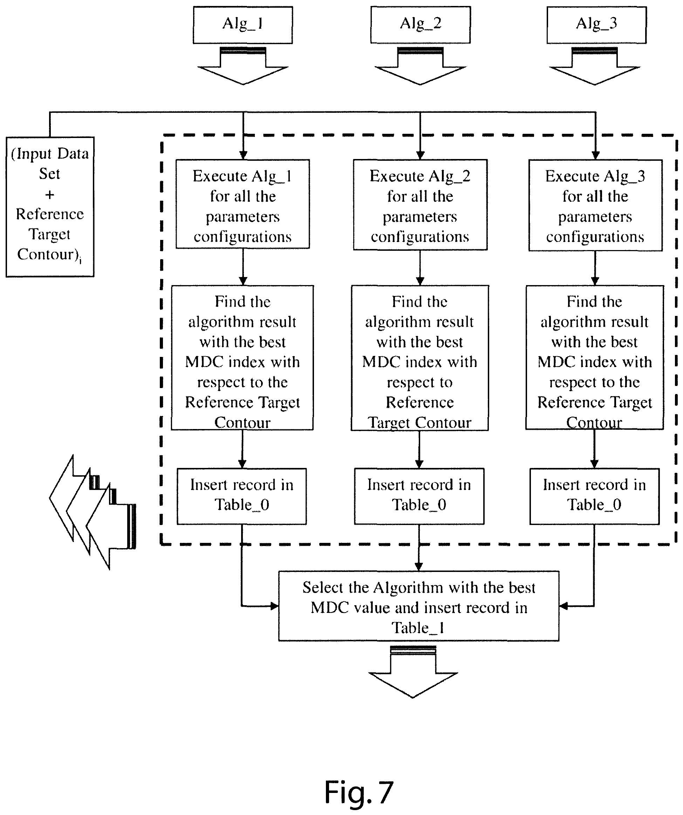

Fig. 7 illustrates a flowchart 70 containing the major steps of an exemplary method for automatic selection and optimization of segmentation algorithms. As mentioned earlier, a plurality of algorithms 700 are available in a computer for performing segmentation on a volumetric dataset. Specifically, a plurality of imaging modalities may each result in a corresponding volumetric dataset upon which the system is to carryout a segmentation process by one of several available techniques 700 or combination thereof. In the example shown, three segmentation algorithms 700 are depicted, although the present method only requires as little as two but may include more than three such segmentation algorithms. An input dataset 702 as well as a pre-segmented manual segmentation profile 704, providing a reference target contour, are provided to the system.

The system can execute any or all of the algorithms 700 employing a variety of parameters within each algorithm. The system may optimize the parameters employed by the segmentation algorithms at step 706. The optimization of the parameters at 706 can be done by systematically varying the parameters so as to achieve an improved segmentation result using the respective algorithms associated with the set of parameters. An optimized or best algorithm and parameter combination with respect to the reference target contour 704 is determined at step 708.

The quality of the segmentation result (and the algorithm and parameter selection and training process) may be decided by comparing the segmentation result with a given algorithm or algorithms and parameter combinations to a benchmark pre-segmented or manually segmented result provided to the system. Therefore, for each available segmentation algorithm Alg_j, given an Input_Data_Set from the training set, we execute the algorithm with all (or substantially a full range) of allowed parameters in the algorithm's parameter space. Then, from among the parameters in the tested parameter space, we determine the set of parameters giving the result best matched to a quality metric or best MDC index relevant to the reference target contour.

The quality of a segmentation result and related calculations may be quantitatively ascertained by comparing an overlap or similarity or correlation between a computed segmentation result and a reference segmentation result. In some embodiments, a mean distance to conformity (MDC) is calculated to compute such a correspondence between a computed segmentation result and a reference segmentation result. In a preferred example, an expert or manual segmentation result is used as the reference segmentation result. In another preferred example, a phantom or similar physically specified or numerically simulated object may be used to determine the reference segmentation result.

The output of the decision making step 708 can be placed as a data record into a table (e.g., Table_0) at step 710, and this can be stored in a memory device, transmitted or output to an output device. Table_0 associates for each couplet (Input_Data_Set, Segmentation_Algorithm) a best parameter configuration as measured by some quality metric and the quality metric itself, for example, the MDC. A second table generated (Table_1) associates for each Input_Data_Set the record from Table_0 relating it to the best segmentation algorithm comparing the quality metric values associated with each algorithm.

At step 712 the system outputs or provides a decision comprising a selected algorithm and parameter set combination having a preferred segmentation result, for example as determined using a measure of MDC. Globally, the result yielding the best MDC can be identified at step 712, which can include identifying a favorable single segmentation algorithm or a weighted combination of segmentation algorithms and associated parameters. In some embodiments, a weighted linear combination of segmentation algorithms and parameters are employed to obtain optimum segmentation output results.

Therefore, for each Input_Data_Set we compare the best MDC obtained above, selecting the algorithm Alg_j that performs best and insert into Table_1 a record for the given Input_Data_Set with a reference to the row in Table_0 for the couplet (Input_Data_Set, Alg_j).

We now add some detail to the earlier discussion of the steps of the method according to one or more embodiments. First, we discuss the data set preparation phase, and specifically the steps of parameter optimization. In an embodiment, for each input data set, each segmentation algorithm is optimized over all of the allowed parameter configurations using a quality metric relating the outputs and the reference target contour. An example already used employs the MDC as one such metric. This returns the algorithm providing the best match. The data preparation phase can be thus divided into three parts acting on each algorithm, as shown in Fig. 7, followed by a fourth part that mixes the results of the previous three together.

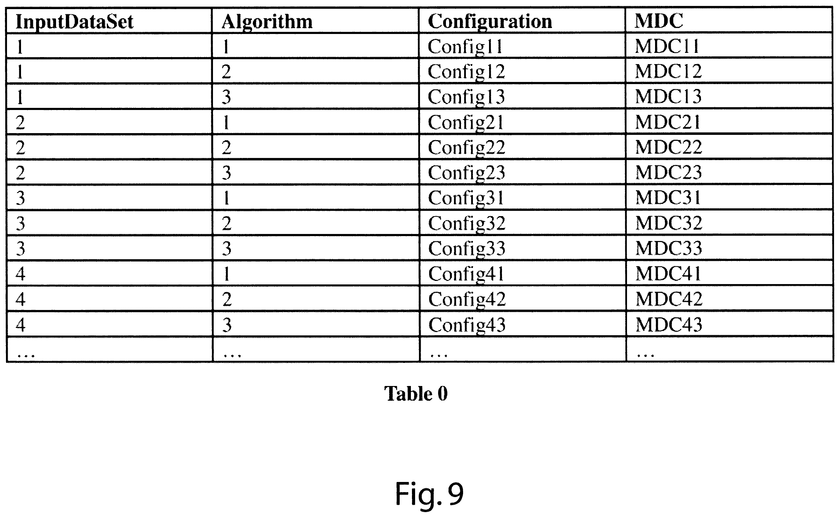

Fig. 9 illustrates an exemplary representation 1100 of the "Table_0" discussed above, which in an embodiment relates the input data sets, the segmentation algorithms, parameter configurations and MDC.

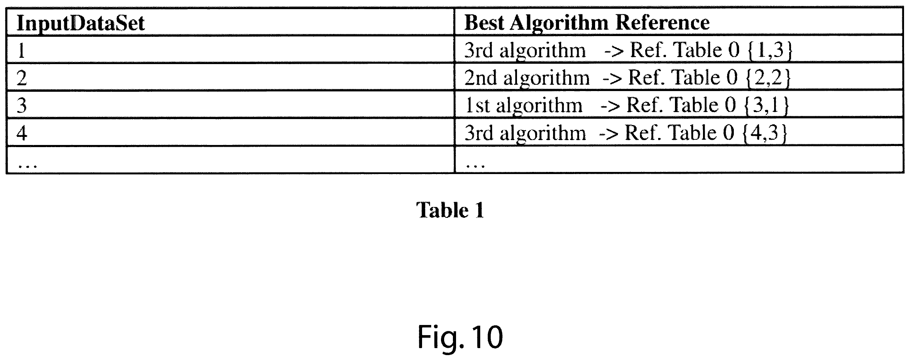

Fig. 10 illustrates an exemplary representation 1200 of the "Table_1" discussed above, which in an embodiment relates an input data set and a best algorithm reference.

An automated system implemented in a computer or processor circuit executing machine readable instructions or program instructions and operating on input data to provide output data is a typical way of carrying out the invention. In practice, a plurality of imaging modalities acting on a corresponding plurality of volumes in a region of interest provide a corresponding input dataset or volumetric dataset. The processor hardware and/or software are configured to allow processing on the volumetric datasets and to generate the MDC or other quality metrics as deemed appropriate. Other algorithms including artificial intelligence, stochastic methods and optimization techniques can be used to select from the plurality of available programmed segmentation algorithms and parameter space associated therewith. The output data may be provided to a human user or operator or may be generated automatically in analog or digital form to be provided to another component of the system. Actual segmentation of images and datasets such as medical imaging datasets can be accomplished once the preferred and optimized algorithms and parameters are chosen as described previously. A mask can be determined such that a multiplication or convolution of an image or dataset with the mask results in a segmented object or segmented portion of a dataset.

Uses of the present system and methods include applications to medical imaging where a portion of a body in a region of interest or a significant clinical aspect thereof such as a diseased organ or portion of an organ can be targeted by proper segmentation of the organ or portion of the body in the region of interest. The training and algorithm selection steps will affect eventual image segmentation or segmentation of input volumetric data sets.

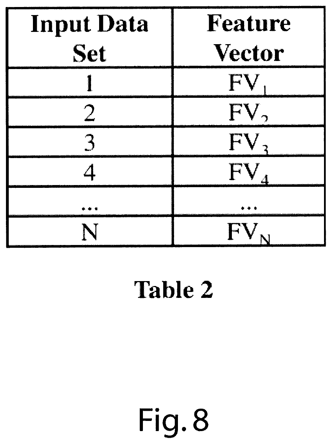

Numerous features of interest can be defined and identified in the process of training and algorithm selection. Fig. 8 illustrates a table 900 ("Table_2") representing feature vectors in column 904 that are associated with input datasets in column 902. A feature vector (FV 904) includes a plurality of scalar features. Exemplary representations of features that may be of interest in the segmentation and selection processes. For each input data set (Input_Data_Set) 902 in the training set a feature vector (FV) 904 is extracted from the ROI in the corresponding volume. The considered features can be of any kind but sufficiently generic to be applied to all possible modalities, which generally represent the characteristics of the region. As a non-limiting example, a mix of texture features (e.g., Haralick features) and global statistical features (e.g., normalized moments of region values) can be used. These FV values can be inserted into memory or other data storage locations represented by "Table_2" 900.

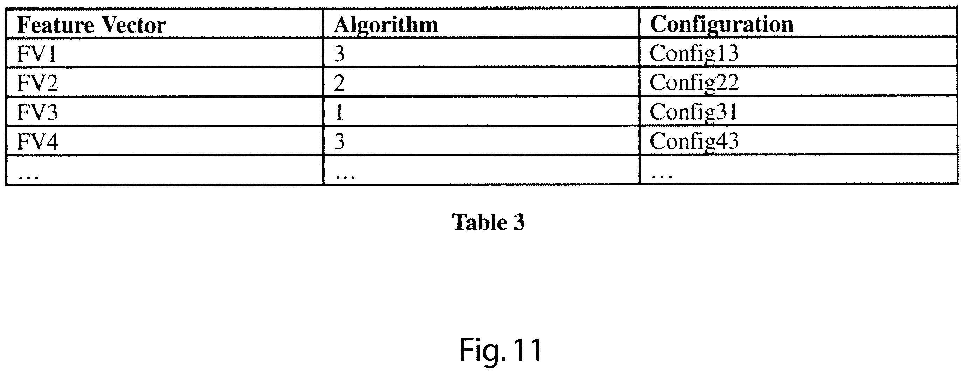

Fig. 11 illustrates a representation of a table 1300 ("Table_3") relating feature vectors (FV) with segmentation algorithms and configurations of the algorithms as discussed above. These relations can be stored in a data storage location as understood by those skilled in the art. Specifically, a FV in feature vector space can be associated with a class or label indicating the corresponding segmentation algorithm that performs better than others on the relevant input data set from which the FV was extracted. This joins the information in tables Table_2, Table_1 and Table_0. The table Table_3 contains this relationship as depicted.

We now describe aspects of the training phase mentioned above. In the preceding phase outputs, among other results, provide information as depicted in Table_3 that can be viewed, if limited to the first two columns (recalling that these are logical notions and the actual implementation is carried out on physical signals and data in a processing system. A multiclass separation of the feature vector space is created, where each class is associated to a specific segmentation algorithm. Each class represents the characteristics (features) that an Input_Data_Setexhibits when the associated segmentation algorithm is expected to give the best results among the other algorithms registered in the system.

Insome aspects, this part of the process is done in an automatic way and can be used by any supervised classification method to generate a multiclass prediction model able to estimate, when interrogated with a different feature vector (FV), the class or algorithm that yields the best segmentation.We may refer to the result of this training phase an AlgorithmPredictorModel.

In this specific example we used a multiclass Support Vector Machine(SVM) as prediction model. A configuration procedure automatically estimates the best training parameters for the model using a grid search on the parameter space and a cross validation approach over the set of FVs retrieved from the previous phase. Other supervised classification methods can be used, for example, artificial neural network, decision tree learning, and others. An intra-class distance metric is computed for each segmentation algorithm.The procedure in this case takes into account, for each class, only the feature vectors of the Table_3 rows labelled with the same algorithm number as shown in Fig. 11. We can refer to the results of this phase AlgorithmConfigurationDistance_k where k is referred to each algorithm index. In an embodiment, the system may use a Mahalonobis distance, that is to compute the intra-class covariance matrix and use it as a metric matrix to estimate distances between two specific FVs, but any other metric can be used as well.

Next, we discuss the execution stage of the above process in further detail according to some embodiments. Specifically, we discuss execution of the segmentation decision making method on a new input data set (X). We continue this illustration using an example, which can of course be generalized as understood by those skilled in the art.

Using the example presented earlier, parameters a$_j$ with 1<=i<=3, can assume values of 0 or 1 with $\sum^3 \alpha_i = 1$.

The FV$_X$ is extracted from the Input Data Set X (in the ROI of Vol1 and/or Vol2). Then, FV$_X$ is used as input of the precomputedAlgorithmPredictorModel obtained in the training phase. Next, The algorithm (or class) with the best prediction index is selected. From this, an optimal parameter configuration is than determined.

Preferably, the system evaluates the distances between FVx and all the feature vectors present in the subset of rows of Table_3 with the same algorithm index of the algorithm selected, e.g., Alg_k. The distance is computed using the pre-computed AlgorithmConfigurationDistance_k.

Continuing with this example, according to the exemplary embodiment, the parameter values are then determined following two different strategies based on the specific nature of each parameter in the configuration of Algorithm_k. Several examples of this step can be considered.

In a first example, parameter covers its range of appliance as a continuous monotone function (for instance, the strength of force, the intensity of a correction, the tolerance in a specific kind of evaluation), that are commonly represented with float, double or integer data type values. In this situation a fuzzy scheme may be applied where the estimated parameter value is obtained as the weighted and normalized average of the values for the same parameter in all the configurations associated with each feature vectors from the Alg_k-specific subset. The weights used are related to the distances computed and may be as high or as low as the distance itself.

In a second example, the parameter represents a discrete choice, commonly a flag that indicates if a certain sub procedure should be executed, or an indicator of different methods for procedures within the algorithm execution. In this case the parameters from the configuration of the nearest feature vector in the same subset as in the first case are taken. A neighbourhood of values is determined using the computed distances of the preceding steps. Now then we have described the parameter optimization process.

Having determined a favourite (e.g., optimized or preferred) segmentation algorithm and parameter choice, the system applies segmentation to the input volumetric data set X of the above example and a segmented volume is output as a segmentation result.

We now look at another embodiment having parameters a$_j$ as above, with 1<=i<=3, can assume all values between 0 or 1 with $\sum_{i=1}^{3} \alpha_i = 1$. In this example, the decision making portion of the system generates a new composite segmentation algorithm capable of limiting both the qualitatively and quantitatively errors. This may be a solution in some cases to situations where use of a single segmentation algorithm is not successful. The initial steps of this example are as in the preceding example and will not be repeated. However, in this example, the a$_j$ values of each algorithm are calculated as the prediction values obtained from the AlgorithmPredictorModel, which are renormalized. The parameter optimization can be done as described before. The segmentation result is obtained as a weighted average of the outputs of the three algorithms in this illustrative example, with respective optimal configurations. In some embodiments, the weighted average may be calculated using different methods if different representations of the reference target contour are used. For example, if they are represented by level sets, the average may be given by a linear combination of the functions (level sets) representing each single result.

The present invention provides, among other things, the notion of a segmentation decision making apparatus and system. This system can be arbitrarily configured in several ways, but a helpful representation of the system can be as follows according to some embodiments.

The system can include a segmentation station, which uses the elements and steps described herein. The segmentation station can be separate or integrated into other imaging and analysis systems. The segmentation station typically includes components, units or subsystems allowing it to load into memory a given Input_Data_Set and present it to the user or another component of the system or an external device. Also, the segmentation station typically includes subsystems to select a ROI that defines the area where a given target is supposed to be present. Furthermore, the segmentation station is adapted to run a target segmentation procedure that automatically determines the target volume and present it to the user. In addition, the system is adapted to allow a user of the system to manually define the target volume or to modify existing representations of the target volume.

The present system can also include a logically defined decision making apparatus, which may be implemented in hardware and software as understood by those skilled in the art. This apparatus can incorporate dedicated persistent storage device such as a database or a dedicated file system structure. In some aspects, the apparatus can include any kind of software architecture that does not explicitly embed the target segmentation procedure into the executable of the segmentation station. But rather, delegates the execution of this procedure to a separated executable or module via a communication interface that could be summarized in the function: Target_Contour = Segment(Input_Data_Set).

According to some embodiments of the decision making apparatus, in addition to the basic functionality of giving a response to the interface function (the target segmentation procedure), the apparatus gives the user the following additional functionalities: Adding a new Input_Data_Set and validated reference target contour; adding a new segmentation algorithm, and reconfiguring the decision making apparatus portion of the system. These features may be provided as options or advanced user interface aspects through a graphical user interface (GUI). This illustration of various embodiments is merely an example of course, and the present invention can be applied differently if desired, and this example shall not be taken as limiting.

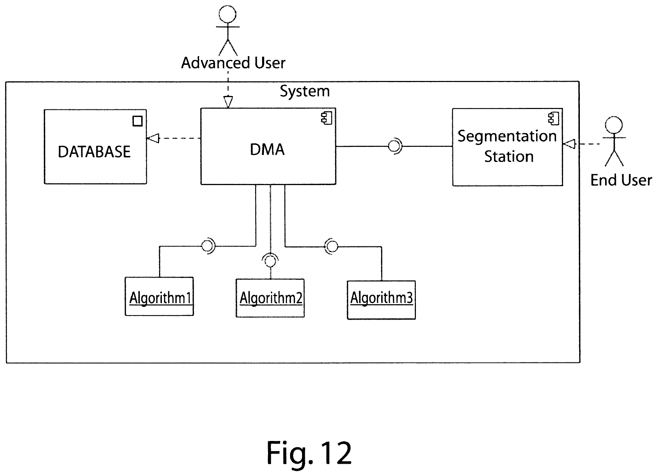

Fig. 12 illustrates components of a system 1400 including a decision making apparatus 1404 (DMA) usable at least by an advanced user and executing machine readable instructions or computer program steps, which has access to a plurality of programmed and available segmentation algorithms 1408. The DMA 1404 may also contain the algorithm predictor model and the models describing the algorithm configuration distance for each available algorithm. Therefore, the DMA 1404 may also contain some data storage device locally therein for its use.

The system also comprises a segmentation station 1406 usable by an end user as described above. The end user loads an input volumetric data set to the system and selects a region of interest (ROI). The end user can request automated target segmentation results as above through a user interface. The segmentation station then passes the user's request to the decision making (DMA) portion of the system 1404 for execution of a one or more algorithms as described previously to offer a favourable segmentation result output.

The system further includes a database 1402 or similar storage mechanism. The database 1402 can store the required data in logical or convenient formats, for example in representations corresponding to the previously-described Table_0, Table_1, Table_2 and Table_3 as well as other information.

The system 1400 permits a flexible architecture supporting a plug-in design so that separate segmentation algorithms can be inserted and applied as separate executable or modular parts of the system having a common interface. The modular system can then support configuration procedures allowing the DMA 1404 to query a segmentation algorithm as to its number and kind of parameters, their ranges and other information. The modular system can also apply target contouring as to a segmentation algorithm applied to a given configuration and input data set as determined from the query step above, which allows the DMA to run an algorithm embedded in the plug-in module of that algorithm on the desired input data set.

This flexible and modular design permits the DMA 1404, in cooperation with the other components of the system 1400, to handle several tasks such as those presented in the following examples. However, those skilled in the art would appreciate that other tasks can be added and handled similarly.

One task of the DMA 1404 is to add a new input data set. The results of the system's segmentation are improved by the addition of new input data sets and corresponding new reference target contours. When a new data set and reference target segmentation is available, they are prepared as described above and added to the stored tables (e.g., Table_3). Training steps are performed over the input data sets and available algorithms. Some new data sets permit additional user interface functionalities as well. For example, the results of a segmentation may be used as a reference target contouring of the new data set so that the addition of the Input_Data_Set and reference target contour can be registered in the system, and the reconfiguration procedure can be executed again.

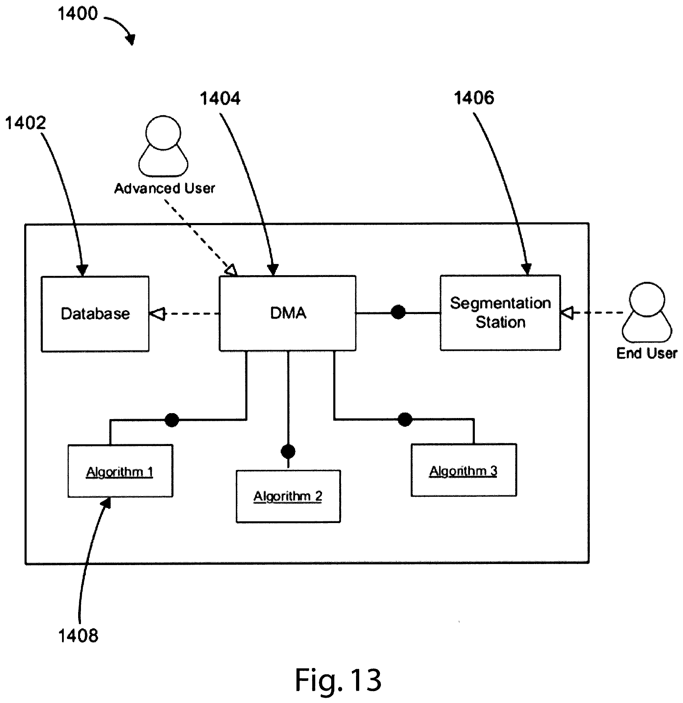

The DMA 1404 can also take a new segmentation algorithm as illustrated in Fig. 13. New algorithms can be registered in the system for future use using a series of steps 1500. The new segmentation algorithm 1502 can be applied as a plug-in in the form of a dynamic library (.dll, .so or other format) and is managed by the DMA 1404.

The processing on the newly added algorithm (e.g., Alg_N+1) is done as described before, and the results are added to Table_0. A comparison of MDC results between the new algorithm and the previously best available algorithm is done on the input data set, and the best of these results is updated into Table_1. If the new algorithm Alg_N+1 is better, Table_3 is updated as well as shown in step 1504.

Additionally, the DMA 1404 can be reconfigured. A user can configure the DMA to take into account all available training data and newly added plug-ins added to the system 1400. The initial preparation of the new data are performed as described above and the system 1400 and DMA 1404 are then available for use with the new information and algorithms as necessary.

It is therefore true that new systems and methods can now be implemented according to the present disclosure. Aspects thereof are captured within the scope of the appended claims, which alone define the bounds of the present inventions. The illustrative examples provided are intended by way of explanation and are not limiting. Those skilled in the art will appreciate how to implement certain ones of the present concepts in a number of ways depending on the intended use or application. For example, the methods can include manipulation of data and numerical results and program instructions encoded into a programmable machine or processor. The hardware can also be adapted for various purposes, including the components needed for generation of the image or volumetric data sets that are input to decision making processing units and which provide outputs to a user interface unit or machine readable segmentation result data storage units.

**Claims**

1. A method for obtaining a segmented image of a region of interest, in a programmable system, comprising:

   A. a training phase, comprising the steps of:

      A1. receiving data sets each comprised of volume data each obtained by imaging a region of interest by a different imaging modality,
      A2. determining a reference segmented image corresponding to each data set;
      A3. extracting, from each data set, a vector of feature values termed feature vector, comprising values for each of said volume data, relating to a pre-determined set of image features;
      A4. applying one or more segmentation algorithms to each of said data sets, each segmentation algorithm being defined by a set of algorithm parameters, each algorithm being applied a plurality of times by varying the values of said algorithm parameters;
      A5. comparing the results of the previous step to the corresponding reference segmented image and obtaining a quality metric quantifying the quality of the segmentation for each segmentation algorithm and algorithm parameters;
      A6. constructing a set of interrelated tables which put into relationship feature vectors, segmentation algorithms, algorithms parameters and quality metric; and

   B. an execution phase, comprising the steps of:

      B1. receiving a data set comprised of volume
      data each obtained by imaging regions of interests by a different imaging modality;
      B2. extracting, from said data set, a vector of feature values termed feature vector, comprising values for each of said volume data, relating to said pre-determined set of image features;
      B3. selecting a best segmentation algorithm and best algorithm parameters for the best segmentation algorithm based on the comparison between said feature vector of the previous step with feature vectors in said set of interrelated tables;
      B4. obtaining a segmented image of said region of interest by segmenting the data set by using the best segmentation algorithm and relevant best algorithm parameters.

2. The method of claim 1, wherein step B3 is carried out by calculating the distances of said feature vector to the feature vectors in said table and selecting a best segmentation algorithm and best algorithm parameters for the best segmentation algorithm based on the value of said distances.

3. The method of claim 1, wherein in step B3 a best algorithm is determined as a weighted average of said one or more algorithms with best algorithm parameters.

4. The method of claim 3, wherein said weighted combination is a linear combination.

**5.** The method of claim 1, wherein in said step A2 the segmented reference image is a manually segmented image.

**6.** The method of claim 1, wherein said quality metric is the mean distance to conformity (MDC).

**7.** A system for segmentation of multimodality data in a region of interest, comprising:

- a multi-modality imager to generate multi-modality data sets;
- a programmable decision making module that takes as inputs said multi-modality data sets and that applies one or more segmentation algorithms stored in said decision making module to said multi-modality data sets according to step A4 of any claim 1-6;
- an optimization module that optimizes a plurality of parameters of said one or more segmentation algorithm according to step A5 of any claim 1-6; and
- an output module that provides a segmentation result output based on application of said one or more segmentation algorithms and said set of parameters, as optimized, to a respective multi-modality data set, according to steps B2 and B3 of any claim 1-6.

**8.** The system of claim 7, further comprising a data storage unit that stores digital representations of a table associating respective ones of said one or more segmentation algorithms, said input data sets and respective segmentation quality metrics corresponding to the same.

**9.** The system of claim 8, further comprising a modular arrangement of programmed instructions each representing a plug-in adapted for executing a newly-added segmentation algorithm and parameter space associated therewith.


**Patentansprüche**

**1.** Verfahren zum Erhalten eines segmentierten Bildes eines interessierenden Bereichs, in einem programmierbaren System, umfassend:

A. eine Trainingsphase, umfassend die Schritte:

A1. Empfangen von Datensätzen, die jeweils Volumendaten umfassen, die jeweils erhalten werden, indem ein interessierender Bereich mittels einer unterschiedlichen Bildgebungsmodalität abgebildet wird,
A2. Bestimmen eines segmentierten Referenzbildes, das jedem Datensatz entspricht;
A3. Extrahieren, aus jedem Datensatz, eines Vektors von Merkmalswerten, der Merkmalsvektor genannt wird, der Werte von jeder der Volumendaten enthält, sich beziehend auf einen vorbestimmten Satz von Bildmerkmalen;
A4. Anwenden eines oder mehrerer Segmentierungsalgorithmen auf jeden der Datensätze, wobei jeder Segmentierungsalgorithmus von einem Satz von Algorithmus-Parametern definiert wird, wobei jeder Algorithmus eine Mehrzahl von Malen angewendet wird, indem die Werte der Algorithmus-Parameter variiert werden;
A5. Vergleichen der Ergebnisse des vorhergehenden Schrittes mit dem entsprechenden segmentierten Referenzbild und Erhalten einer Qualitätsmetrik, die die Qualität der Segmentierung für jeden Segmentierungsalgorithmus und Algorithmus-Parameter quantifiziert;
A6. Erstellen eines Satzes von verknüpften Tabellen, die in Verhältnis-Merkmalsvektoren Segmentierungsalgorithmen, Algorithmus-Parameter und eine Qualitätsmetrik einfügen; und

B. eine Ausführungsphase, die die Schritte umfasst:

B1. Empfangen eines Datensatzes, der Volumendaten umfasst, die jeweils erhalten werden, indem interessierende Bereiche mittels einer unterschiedlichen Bildgebungsmodalität abbilden;
B2. Extrahieren, aus dem Datensatz, eines Vektors von Merkmalswerten, der Merkmalsvektor genannt wird, der Werte für jede der Volumendaten enthält, sich beziehend auf den vorbestimmten Satz von Bildmerkmalen;
B3. Auswählen eines besten Segmentierungsalgorithmus und von besten Algorithmus-Parametern für den besten Segmentierungsalgorithmus auf Basis des Vergleichs zwischen dem Merkmalsvektor des vorhergehenden Schrittes mit Merkmalsvektoren in dem Satz von verknüpften Tabellen;
B4. Erhalten eines segmentierten Bildes des interessierenden Bereichs, indem der Datensatz segmentiert wird, indem der beste Segmentierungsalgorithmus und relevante beste Algorithmus-Parameter verwendet werden.

2. Verfahren nach Anspruch 1, wobei Schritt B3 ausgeführt wird, indem die Abstände des Merkmalsvektors zu den Merkmalsvektoren in der Tabelle berechnet werden und indem ein bester Segmentierungsalgorithmus und beste Algorithmus-Parameter für den besten Segmentierungsalgorithmus auf Basis des Werts der Abstände ausgewählt wird.

3. Verfahren nach Anspruch 1, wobei im Schritt B3 ein bester Algorithmus als ein gewichteter Mittelwert des einen oder der mehreren Algorithmen mit besten Algorithmus-Parametern bestimmt wird.

4. Verfahren nach Anspruch 3, wobei die gewichtete Kombination eine Linearkombination ist.

5. Verfahren nach Anspruch 1, wobei im Schritt A2 das segmentierte Referenzbild ein manuell segmentiertes Bild ist.

6. Verfahren nach Anspruch 1, wobei die Qualitätsmetrik der mittlere Abstand zur Konformität (MDC) ist.

7. System zur Segmentierung von Multimodalitätsdaten in einem interessierenden Bereich, umfassend:

   - einen Multimodalitäts-Bildgeber, um Multimodalitäts-Datensätze zu erzeugen;
   - ein programmierbares Entscheidungsmodul, das als Eingaben die Multimodalitäts-Datensätze entgegennimmt, und das einen oder mehrere Segmentierungsalgorithmen, die im Entscheidungsmodul gespeichert sind, auf die Multimodalitäts-Datensätze gemäß Schritt A4 nach einem der Ansprüche 1-6 anwendet;
   - ein Optimierungsmodul, das eine Mehrzahl von Parametern des einen oder der mehreren Segmentierungsalgorithmen gemäß Schritt A5 nach einem der Ansprüche 1-6 optimiert; und
   - ein Ausgabemodul, das ein Segmentierungsergebnis, das ausgegeben wird, auf Basis der Anwendung der einen oder mehreren Segmentierungsalgorithmen und des Satzes von Parametern, wie optimiert, an einen jeweiligen Multimodalitäts-Datensatz bereitstellt, gemäß den Schritten B2 und B3 nach einem der Ansprüche 1-6.

8. System nach Anspruch 7, weiter umfassend eine Datenspeichereinheit, die digitale Darstellungen einer Tabelle speichert, die die jeweiligen der einen oder mehreren Segmentierungsalgorithmen zuordnet, wobei dieser die eingegebenen Datensätze und jeweilige Segmentierungs-Qualitätsmetriken entsprechen.

9. System nach Anspruch 8, weiter umfassend eine modulare Anordnung von programmierten Anweisungen, die jeweils ein Plug-in darstellen, das dazu angepasst ist, einen neu hinzugefügten Segmentierungsalgorithmus und diesem zugeordneten Parameterraum auszuführen.

## Revendications

1. Procédé pour obtenir une image segmentée d'une région d'intérêt, dans un système programmable, comprenant :

   A. une phase d'apprentissage, comprenant les étapes de :

      A1. réception d'ensembles de données comportant des données de volume obtenues chacune par imagerie d'une région d'intérêt par une modalité d'imagerie différente,
      A2. détermination d'une image segmentée de référence correspondant à chaque ensemble de données ;
      A3. extraction, depuis chaque ensemble de données, d'un vecteur de valeurs caractéristiques appelé vecteur caractéristique, comprenant des valeurs pour chacune desdites données de volume, concernant un ensemble prédéterminé de caractéristiques d'image ;
      A4. application d'un ou de plusieurs algorithmes de segmentation à chacun desdits ensembles de données, chaque algorithme de segmentation étant défini par un ensemble de paramètres d'algorithme, chaque algorithme étant appliqué une pluralité de fois par variation des valeurs desdits paramètres d'algorithme ;
      A5. comparaison des résultats de l'étape précédente à l'image segmentée de référence correspondante et obtention d'une métrique de qualité quantifiant la qualité de la segmentation pour chaque algorithme de segmentation et des paramètres d'algorithme ;
      A6. construction d'un ensemble de tables interreliées qui mettent en relation des vecteurs caractéristiques, des algorithmes de segmentation, des paramètres d'algorithme et une métrique de qualité ; et

B. une phase d'exécution, comprenant les étapes de :

B1. réception d'un ensemble de données comprenant des données de volume obtenues chacune par imagerie de régions d'intérêt par une modalité d'imagerie différente ;

B2. extraction, depuis ledit ensemble de données, d'un vecteur de valeurs caractéristiques appelé vecteur caractéristique, comprenant des valeurs pour chacune desdites données de volume, concernant ledit ensemble prédéterminé de caractéristiques d'image ;

B3. sélection d'un meilleur algorithme de segmentation et de meilleurs paramètres d'algorithme pour le meilleur algorithme de segmentation sur la base de la comparaison entre ledit vecteur caractéristique de l'étape précédente avec des vecteurs caractéristiques dans ledit ensemble de tables interreliées ;

B4. obtention d'une image segmentée de ladite région d'intérêt par segmentation de l'ensemble de données à l'aide du meilleur algorithme de segmentation et des meilleurs paramètres d'algorithme pertinents.

2. Procédé selon la revendication 1, dans lequel l'étape B3 est effectuée par calcul des distances dudit vecteur caractéristique aux vecteurs caractéristiques dans ladite table et par sélection d'un meilleur algorithme de segmentation et de meilleurs paramètres d'algorithme pour le meilleur algorithme de segmentation sur la base de la valeur desdites distances.

3. Procédé selon la revendication 1, dans lequel, à l'étape B3, un meilleur algorithme est déterminé en tant que moyenne pondérée desdits un ou plusieurs algorithmes avec de meilleurs paramètres d'algorithme.

4. Procédé selon la revendication 3, dans lequel ladite combinaison pondérée est une combinaison linéaire.

5. Procédé selon la revendication 1, dans lequel, à ladite l'étape A2, l'image de référence segmentée est une image segmentée manuellement.

6. Procédé selon la revendication 1, dans lequel ladite métrique de qualité est la distance moyenne à la conformité (MDC).

7. Système de segmentation de données à multimodalités dans une région d'intérêt, comprenant :

- une image à multimodalités pour générer des ensembles de données à multimodalités ;

- un module de prise de décision programmable qui prend en tant qu'entrées lesdits ensembles de données à multimodalités et qui applique un ou plusieurs algorithmes de segmentation stockés dans ledit module de prise de décision auxdits ensembles de données à multimodalités selon l'étape A4 selon l'une quelconque des revendications 1 à 6 ;

- un module d'optimisation qui optimise une pluralité de paramètres desdits un ou plusieurs algorithmes de segmentation selon l'étape A5 selon l'une quelconque des revendications 1 à 6 ; et

- un module de sortie qui fournit une sortie de résultat de segmentation sur la base d'une application desdits un ou plusieurs algorithmes de segmentation et dudit ensemble de paramètres, en tant qu'optimisée, à un ensemble de données à multimodalités respectif, selon des étapes B2 et B3 selon l'une quelconque des revendications 1 à 6.

8. Système selon la revendication 7, comprenant en outre une unité de stockage de données qui stocke des représentations numériques d'une table associant des algorithmes respectifs desdits un ou plusieurs algorithmes de segmentation, lesdits ensembles de données d'entrée et des métriques de qualité de segmentation respectives correspondant à ceux-ci.

9. Système selon la revendication 8, comprenant en outre un agencement modulaire d'instructions programmées représentant chacune un module d'extension adapté pour exécuter un algorithme de segmentation nouvellement ajouté et un espace de paramètres associé à celui-ci.

(PRIOR ART)

Fig. 1

Fig. 2

$$V_1: \quad \mathfrak{R}^3 \rightarrow \mathfrak{R}$$

$$\ldots\ldots\ldots\ldots\ldots$$

$$V_m: \quad \mathfrak{R}^3 \rightarrow \mathfrak{R}$$

$$VM: R^3 \Rightarrow R^m$$

$$VM(x,y,z) := (V_0(x,y,z)\ldots V_m(x,y,z))$$

Decision Making Algorithm (DMA)

A set of parameters:

(alpha$_1$, parA1, …,parA$_{k1}$,..,alpha$_n$, parG1,….,parG$_{kn}$)

$$K = n + \sum_{j=1}^{n} Kj$$

Fig.3

EP 2 863 360 B1

EP 2 863 360 B1

Input:
n volumes
(3D data sets)

Algorithms with parameters to
be optimized

Mod. 1

Mod. 2

Mod. 3

Mod. n

Decision
Making
Algorithm
(DMA)

Alg. 1 (par1, par2;...par n)

Alg. 2 (par1, par2;...par n)

Alg. n (par1, par2;...par n)

$$DMA(\alpha, par1, par2, \beta, par1, par2,...) = \alpha*Alg_1(par_11, par_12,...) +$$
$$\beta*Alg_2(par_21, par_22,...) + ...$$

Mod = imaging modalities: CT/CBCT, Tomosintesi, PET, 3DUS,
MRI, fMRI,....

Fig. 4

Fig. 5

Volume = Volume$_{mod1}$ x Volume$_{mod2}$ x.... Volume$_{modn}$

N dimensional
modalities space

DMA parameters
space

Mod n subspace

Par m

Mod 1 subspace

Par 1

Mod 2 subspace

Par 2

Fig. 6

EP 2 863 360 B1

Fig. 7

| Input Data Set | Feature Vector |
|:---:|:---:|
| 1 | $FV_1$ |
| 2 | $FV_2$ |
| 3 | $FV_3$ |
| 4 | $FV_4$ |
| ... | ... |
| N | $FV_N$ |

**Table 2**

# Fig. 8

| InputDataSet | Algorithm | Configuration | MDC |
|---|---|---|---|
| 1 | 1 | Config11 | MDC11 |
| 1 | 2 | Config12 | MDC12 |
| 1 | 3 | Config13 | MDC13 |
| 2 | 1 | Config21 | MDC21 |
| 2 | 2 | Config22 | MDC22 |
| 2 | 3 | Config23 | MDC23 |
| 3 | 1 | Config31 | MDC31 |
| 3 | 2 | Config32 | MDC32 |
| 3 | 3 | Config33 | MDC33 |
| 4 | 1 | Config41 | MDC41 |
| 4 | 2 | Config42 | MDC42 |
| 4 | 3 | Config43 | MDC43 |
| … | … | … | … |

**Table 0**

Fig. 9

| InputDataSet | Best Algorithm Reference |
|---|---|
| 1 | 3rd algorithm   -> Ref. Table 0 {1,3} |
| 2 | 2nd algorithm  -> Ref. Table 0 {2,2} |
| 3 | 1st algorithm   -> Ref. Table 0 {3,1} |
| 4 | 3rd algorithm  -> Ref. Table 0 {4,3} |
| ... | ... |

**Table 1**

Fig. 10

| Feature Vector | Algorithm | Configuration |
| --- | --- | --- |
| FV1 | 3 | Config13 |
| FV2 | 2 | Config22 |
| FV3 | 1 | Config31 |
| FV4 | 3 | Config43 |
| … | … | … |

**Table 3**

Fig. 11

EP 2 863 360 B1

Fig. 12

Fig. 13

Alg_1 ... Alg_n Alg_n+1

(Input Data Set)$_i$
+
Reference Target
Contour

Execute Alg_1
for all the
parameters
configurations

Execute Alg_n
for all the
parameters
configurations

Execute Alg_n+1
for all the
parameters
configurations

Find the algorithm
result with the best
MDC index with
respect to the
Reference Target
Contour

Find the
algorithm result
with the best
MDC index with
respect to the
Reference Target
Contour

Find the algorithm
result with the
best MDC index
with respect to the
Reference Target
Contour

Insert record in
Table_0

Insert record in
Table_0

Insert record in
Table_0

If the new MDC value is better than
the old one, Table_1 ( and in turn
Table_3) is updated with the new
Algorithm reference

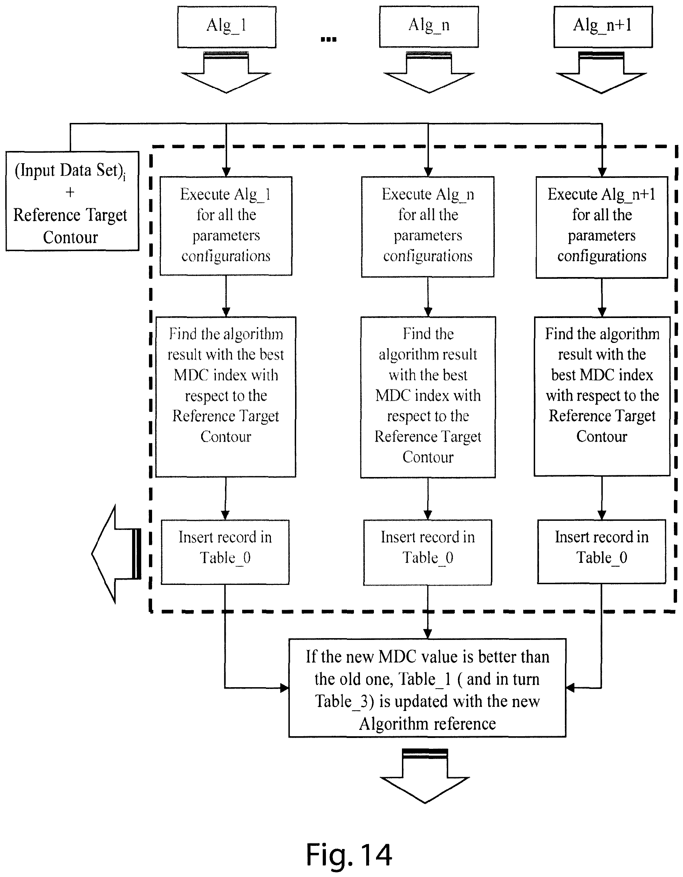

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- ADAPTIVE IMAGE SEGMENTATION USING A GE-NETIC ALGORITHM. **BHANU B et al.** IEEE TRANS-ACTIONS ON SYSTEMS, MAN AND CYBERNET-ICS. IEEE INC, 01 December 1995, vol. 25, 1543-1566